## Europäisches Patentamt

## European Patent Office

## Office européen des brevets

(19)

(11) Numéro de publication: **0 138 659**
**B1**

(12) # FASCICULE DE BREVET EUROPÉEN

(45) Date de publication du fascicule du brevet:
06.12.89

(51) Int. Cl.⁴: **F 16 B 21/16**

(21) Numéro de dépôt: **84401801.0**

(22) Date de dépôt: **12.09.84**

(54) Dispositif de montage d'un capuchon protecteur sur un support.

(30) Priorité: **19.09.83 FR 8314860**

(43) Date de publication de la demande:
**24.04.85 Bulletin 85/17**

(45) Mention de la délivrance du brevet:
**06.12.89 Bulletin 89/49**

(84) Etats contractants désignés:
**DE GB IT SE**

(56) Documents cité:
**FR-A-1 483 068**
**GB-A-1 228 044**

**INDUSTRIAL FASTENERS HANDBOOK, 1ère édition, 1976, page 287, Trade & Technical Press Ltd, Morden, Surrey, GB**

(73) Titulaire: **BENDIX France, 126, rue de Stalingrad, F-93700 Drancy (FR)**

(72) Inventeur: **Perrin, Alain, Résidence Arthur Rimbaud 10, rue de la République, F-93000 Bobigny (FR)**
Inventeur: **Moinard, Patrice, 47, rue de la Fédération, F-93100 Montreuil (FR)**

(74) Mandataire: **Lejet, Christian, Division Technique Service Brevets BENDIX Europe 126, rue de Stalingrad, F-93700 Drancy (FR)**

EP 0 138 659 B1

2

**Description**

La présente invention concerne un dispositif de montage de montage d'un capuchon protecteur sur un support, par exemple un correcteur de freinage. Il est souhaitable qu'un ensemble de freinage avec des composants coulis sants soit pourvu d'un capuchon protecteur pour éviter l'entrée de particules ou d'éléments contaminants. Typiquement ce capuchon est en caoutchouc ou autre matière plastique et est monté sur l'ensemble par l'intermédiaire d'un circlip.

Un exemple d'un correcteur de freinage pourvu d'un capuchon protecteur est donné par le brevet français N° 1 483 088 constituant la base de départ de l'inventinon. Ce brevet décrit un correcteur cylindrique ayant, un bout, une surface de base sur laquelle est monté un capuchon. Un élément de montage annulaire est associé au capuchon et l'ensemble est retenu par un circlip qui est engagé dans une gorge dans la paroi cylindrique du corps du correcteur. Ce dispositif présente l'inconvénient que la surface de base et la gorge doivent être usinées dans le corps et rendent le montage et démontage du capuchon délicat.

La présente invention a donc pour objet de proposer un dispositif de montage d'un capuchon protecteur sur un support, de construction simple, de faibles coûts de fabrication et de fiabilité accrue, et convenant notamment à des supports obtenus par extrusion. Pour ce faire l'invention concerne un dispositif de montage d'un capuchon protecteur sur un support, le support ayant une surface de base destinée à être au moins partiellement protégée par le capuchon et une première surface d'appui, le dispositif comprenant un premier élément rigide relié à la périphérie du capuchon et un élément de blocage disposé entre le premier élément rigide et la première surface d'appui.

Selon l'invention, le support comporte des deuxième et troisième surfaces d'appui parallèles à la surface de base le premier élément rigide comporte une première extrémité et une seconde extrémité partiellement enroulée, qui coopèrent respectivement avec les deuxième et troisième surfaces d'appui, et est retenu en place par l'élément de blocage qui prend appui contre la première surface d'appui et l'élément de blocage est inséré à coulissement latéralement entre le premier élément rigide et la première surface d'appui pour fixer en position le capuchon en appui sur la surface de base du support. De préférence, l'élément de blocage qui est rigide, est inséré parallèlement à la surface de base. D'autres caractéristiques et avantages de la présente invention ressortiront de la description suivante d'un mode de réalisation donné à titre illustratif en relation avec les dessins annexés sur lesquels:

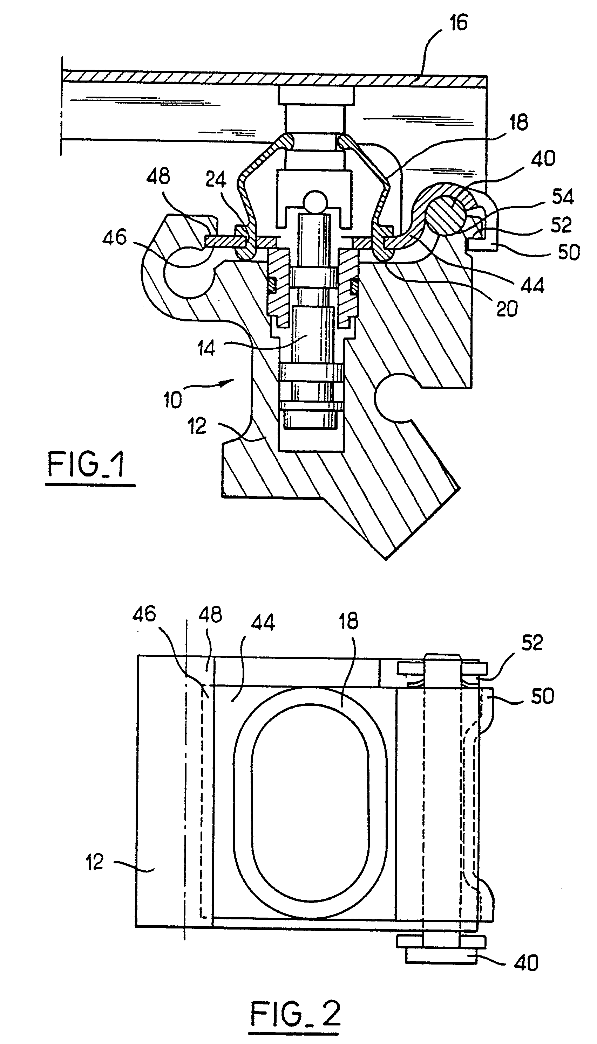

– La Fig. 1 est une vue coupe longitudinale d'un correcteur pourvu d'un dispositif de montage selon l'invention;
– La Fig. 2 est une vue du dessus du correcteur de la Fig. 1; et

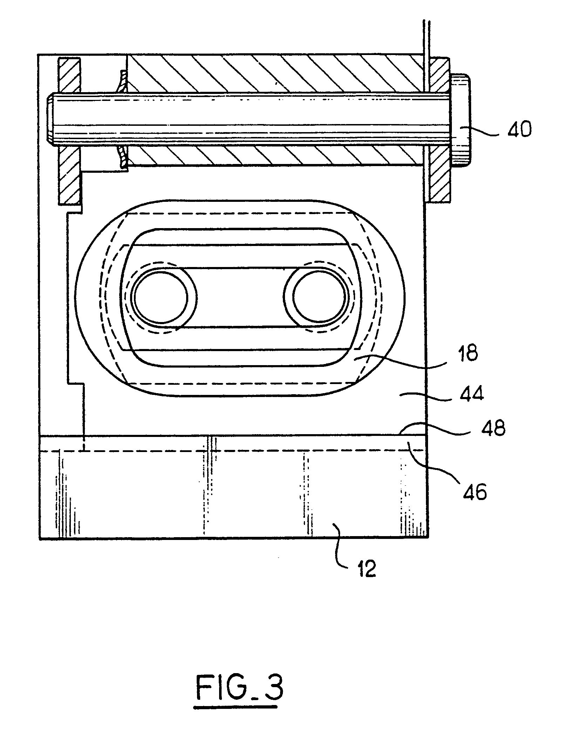

– La Fig. 3 est une vue en coupe partielle transversale du correcteur de la Fig. 1.

Comme on le voit sur les Figures, un correcteur 10 comprend un corps 12, par exemple, en alliage léger, qui, dans l'exemple illustré, est réalisé sous la forme d'un profilé extrudé qui a été ultérieurement découpé. Dans le mode de réalisation représenté, dans le boîtier 12 sont montés coulissants deux pistons 14 qui peuvent être déplacés en fonction de la charge du véhicule sous l'effet d'un levier 16. Un capuchon protecteur 18 en caoutchouc ou autre matière élastomère est monté sur une surface de base plane 20 du corps 12. A la périphérie de l'embase du capuchon 18 est associé un élément rigide sensiblement annulaire 44.

L'élément rigide 44 est relié au capuchon protecteur 18 par exemple par surmoulage. L'élément 44 a une extrémité 46 qui coopère avec une surface 48 et une extrémité opposée partiellement enroulée 50 qui engage une deuxième surface 52, les deux surfaces d'appui 48, 52 prévues dans le corps 12 étant parallèles à la base 20. L'élément 44 est retenu en place par l'axe 40 de montage et d'articulation du levier 16 qui prend appui contre une surface de portée d'appui cylindrique 54 formée sur le corps 12 et l'élément 44. L'élément 44 est monté dans la gorge 24 du capuchon 18 et l'ensemble est mis en place autour des pistons 14. L'ensemble est ensuite déplacé vers la gauche en regardant la figure pour que les bords 46 et 50 engagent les surfaces 48 et 52. L'ensemble est retenu en place par l'axe 40 de montage du levier 16 qui est inséré à coulissement entre l'élément 44 et la surface d'appui 54 du corps 12.

**Revendications**

1. Dispositif de montage d'un capuchon protecteur (18) sur un support (12), le support (12) ayant une surface de base (20) destinée à être au moins partiellement protégée par le capuchon (18) et une première surface d'appui (54), le dispositif comprenant un premier élément rigide (44) relié à la périphérie du capuchon (18), et un élément de blocage (40) disposé entre le premier élément rigide (44) et la première surface d'appui (54), ledit dispositif étant caractérisé en ce que ledit support (12) comporte des deuxième et troisième surfaces d'appui (48, 52) parallèles à ladite surface de base (20), que ledit premier élément rigide (44) comporte une première extrémité (46) et une seconde extrémité (50) partiellement enroulée, qui coopèrent respectivement avec lesdites deuxième et troisième surfaces d'appui (48, 52), et est retenu en place par ledit élément de blocage (40) qui prend appui contre ladite première surface d'appui (54), et que ledit élément de blocage (40) est inséré à coulissement latéralement entre ledit premier élément rigide (44) et ladite première surface d'appui (54) pour fixer en

3

position le capuchon (18) en appui sur ladite surface de base (20) du support.

2. Dispositif selon la revendication 1, caractérisé en ce que ledit élément de blocage (40) est rigide.

3. Dispositif selon la revendication 1 ou la revendication 2, caractérisé en ce que ledit élément de blocage (40) est inséré parallèlement à la surface de base (20).

## Patentansprüche

1. Vorrichtung zur Befestigung einer Schutzkappe (18) auf einem Träger (12), der eine Grundfläche (20), die dazu bestimmt ist, von der Schutzkappe (18) wenigstens teilweise geschützt zu werden, sowie eine erste Abstützfläche (54) aufweist, wobei die Vorrichtung ein erstes steifes Element (44), das mit dem Umfang der Schutzkappe (18) verbunden ist, sowie ein Blockierelement (40) umfaßt, welches zwischen dem ersten steifen Element und der ersten Abstützfläche (54) angeordnet ist, wobei diese Vorrichtung dadurch gekennzeichnet ist, daß der Träger (12) eine zweite Abstützfläche (48) sowie eine dritte Abstützfläche (52) umfaßt, die zu der Grundfläche (20) parallel sind, daß das erste steife Element (44) ein erstes Ende (46) und ein zweites, teilweise aufgewickeltes Ende (50) umfaßt, die mit der zweiten Abstützfläche (48) bzw. mit der dritten Abstützfläche (52) zusammenwirken, und durch dieses Blockierelement (40), das sich auf der ersten Abstützfläche (54) abstützt, in seiner Position festgehalten ist, und daß das Blockierelement (40) seitlich zwischen dem ersten steifen Element (44) und der ersten Abstützfläche (54) gleitend eingefügt ist, um die Schutzkappe (18) auf der Grundfläche (20) des Trägers abstützend in seiner Position festzuhalten.

2. Vorrichtung nach Anspruch 1, dadurch gekennzeichnet, daß das Blockierelement (40) steif ist.

3. Vorrichtung nach Anspruch 1 oder 2, dadurch gekennzeichnet, daß das Blockierelement (40) zu der Grundfläche (20) parallel eingefügt ist.

## Claims

1. Device for mounting a protective cap (18) on a support (12), the support (12) having a base surface (20) intended to be at least partially protected by the cap (18) and a first bearing surface (54), the device comprising a first rigid component (44) joined to the periphery of the cap (18), and a locking component (40) situated between the first rigid component and the first bearing surface (54), the said device being characterised in that the said support (12) has second and third bearing surfaces (48, 52) parallel to the said base

4

surface (20), in that the said first rigid component (44) has a first end (46) and a partially wound second end (50) which interact respectively with the said second and third bearing surfaces (48, 52) and is retained in place by the said locking component (40) which bears against the said first bearing surface (54), and in that the said locking component (40) is inserted laterally slideably between the said first rigid component (44) and the said first bearing surface (54), in order to fix in position the cap (18) bearing on the said base surface (20) of the support.

2. Device according to claim 1, characterised in that the said locking component (40) is rigid.

3. Device according to claim 1 or claim 2, characterised in that the said locking component (40) is inserted in a direction parallel to the base surface (20).

FIG_1

FIG_2

FIG_3